# EUROPEAN PATENT SPECIFICATION

(11) **EP 3 287 226 B1**
(45) Date of publication and mention of the grant of the patent: **22.04.2020**
(21) Application number: 17187703.8
(22) Date of filing: 24.08.2017
(51) Int. Cl.: B23K 20/12, B23K 33/00, B23K 101/00, B23K 103/18

(54) **METHOD OF LINEAR FRICTION WELDING WORKPIECES**
LINEAR REIBSCHWEISSVERFAHREN VON WERKSTÜCKEN
PROCÉDÉ DE SOUDAGE PAR FRICTION LINEAIRE DE PIECES

(30) Priority: 26.08.2016 GB 201614566
(43) Date of publication of application: 28.02.2018
(73) Proprietor: Rolls-Royce plc, London N1 9FX (GB)
(72) Inventor: Bray, Simon, Derby, Derbyshire DE24 8BJ (GB); Walpole, Andrew, Derby, Derbyshire DE24 8BJ (GB); Wilson, Robin, Derby, Derbyshire DE24 8BJ (GB)
(74) Representative: Rolls-Royce plc

(56) References cited:
- EP-A1- 1 555 081
- GB-A- 416 365

## Description

### Field of the Disclosure

The present disclosure relates to a method linear friction welding according to the preamble of Claim 1 (see for example EP 1 555 081 A1)..

### Background to the Disclosure

Linear friction welding (LFW) is a solid state welding process for joining regular and irregular sections of metallic or non-metallic materials either welded to themselves or each other.

Welds are produced by linear oscillation, at a given frequency, of one part against the other while the parts are pressed together by a forge force applied to the interface.

During the LFW process, the components are locally heated at the contact zone by the friction force resulting from the combination of relative oscillatory motion and the forge force. As the temperature at the contact zone increases, the material becomes highly plastic, and flash is extruded from the weld zone under the action of the oscillatory motion and the forge force.

The continued application of the forge force during the LFW process causes the components to become closer together in a direction normal to that of the oscillatory motion. This length reduction occurs as long as the component material behaves in a plastic manner.

When the components have reached the desired length reduction (known as the burn-off distance) the oscillation amplitude is ramped-down to zero, and the parts are hot-forged together by the forge force for a predetermined time whilst the weld cools.

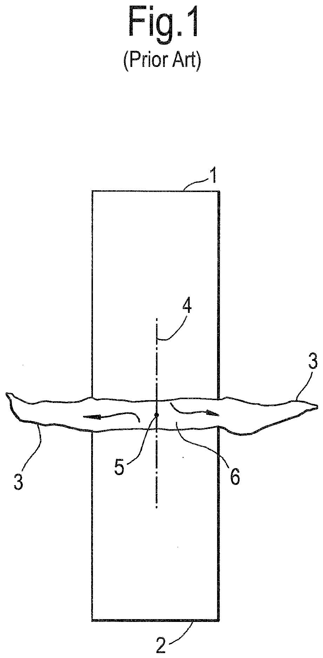

In a conventional LFW process, the components are formed with planar weld joint surfaces. This arrangement has been shown to retain contaminants in the weld joint even after appreciable burn-off, as shown in Figure 1. In the prior art arrangement of Figure 1, the weld stubs 1,2 have a weld interface 6. The centre-line of the weld interface is indicated as 4. As the weld stubs 1,2 are forced together during the LFW process material is ejected from the joint as flash 3. The centre-line 4 down the length of the material approximately divides the regions where material is ejected to the right and left of the joint.

Any contaminants 5 sitting on or close to the centre-line 4 may not be ejected from the weld between stubs 1 and 2 and are therefore not extruded into the flash 3 and instead remain in the weld joint. These retained contaminants may compromise the weld integrity.

Edge breakaway is a welding feature characterised by deformation of the edge of the LFW stub such that a large cold chunk of parent material breaks off releasing local constraint to plastic flow and allowing material to be preferentially drawn across the weld. This potentially compromises weld integrity by exposing the full weld joint to atmospheric contamination formed at the weld interface during heating, for example by forming hard alpha particles in titanium alloys.

Deformation of the edge of the LFW stub can compromise optimum conditions for the extrusion and ejection of contamination from the weld. In extreme circumstances, the deformed stub corners may detach, further compromising optimum material flow conditions. This deformation and detachment of the stub corners may occur symmetrically or asymmetrically.

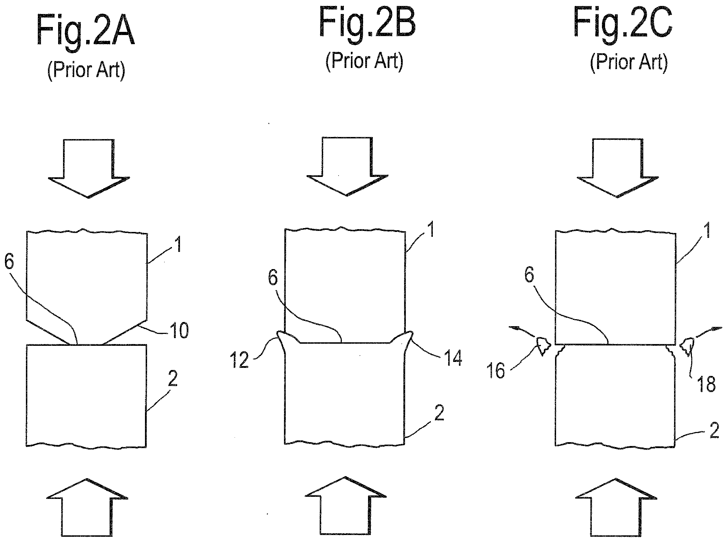

Figures 2A to 2C illustrates a schematic progression of a typical LFW process showing how deformation or detachment of the stub corners occurs when one of the weld stubs 1 is provided with an angled face geometry 10. This tapering region at the weld interface expels contaminants from the interface 6 by changing the flow regime from that which would be expected by the use of planar surfaces. This can prevent the inclusion of contaminants in the weld interface 6 by generating an increased quantity of flash 3. However, as the angled face stub 1 digs into the opposing flat faced stub 2 (shown in Figure 2B), some of the material from the weld interface 6 is deformed at the edges 12,14 of the weld interface 6.

As the LFW process progresses, this deformed material 12,14 detaches from the weld stub 2 and is ejected into the flash 16,18.

The conditions that lead to deformation and detachment of the stub corners may be exacerbated by welding two workpieces of dissimilar alloy materials.

GB 416 365 A discloses a method of producing by arc welding a joint of high resistance to permanent alternating stress. A cross-section of the outermost layer of the weld is broadened towards both sides from a point in the neighbourhood of the surface of the parts, and welding is effected by electrodes of large diameter and with thick flux sheaths so that the edges of the seam are melted substantially by indirect heating by the fluid slag. The electrode is moved to and fro perpendicularly to the seam so as to complete the outermost layer in a single operation. The form of seam may be produced by bevelling or rounding off the outer corners of the weld groove. The welding bead may be subsequently flattened or removed. The sheath may have a volume equal to or greater than that of the metal core and consists of fluxes free from oxidizing constituents. A suitable flux paste consists of 75 parts of talc, 25 parts of water glass and 10 parts of 50 per cent ferro-manganese. The tip of the electrode is preferably guided in a sine curve, the stroke of the travel perpendicular to the seam being 4mm on either side and the onward travel parallel to the seam being 5mm for each reciprocation perpendicular to the seam.

EP 1 555 081 A1 discloses a friction welding process in which a first workpiece has a first weld surface, and a second workpiece has a second weld surface. The first and second workpieces can be welded together at the first and second weld surfaces. The workpieces are arranged in engagement with each other at the weld surfaces. Relative oscillatory motion is imparted to the workpieces such that at least one weld surface moves across the other, thereby raising the temperature at the weld surfaces to create a weld interface. The relative oscillatory motion is ceased and the weld surfaces are allowed to cool to weld the first and second workpieces together at the interface. The first workpiece has an outwardly extending portion, and the first weld surface is provided on the outwardly extending portion. The outwardly extending portion includes an apex region, which engages the second weld surface. A side face extends from one side of the apex region to provide a gap between the side face and the second weld surface). The aforementioned gap is of sufficient size to allow weld flash material formed during said oscillatory motion to pass from the weld interface through the gap.

### Statements of Disclosure

According to a first aspect of the present disclosure, not forming part of the present invention, there is provided a workpiece for use with a friction welding process, the workpiece comprising a weld surface,
wherein the weld surface comprises a central ridge surface extending along the weld surface, the central ridge surface being flanked on either side respectively by a first surface and a second surface, the first surface subtending a first angle with the central ridge surface, and the second surface subtending a second angle with the central ridge surface, the first surface being further flanked by a third surface, and the second surface being further flanked by a fourth surface, the third surface subtending a third angle with the central ridge surface, and the fourth surface subtending a fourth angle with the central ridge surface, and each of the third angle and the fourth angle being less than 90°.

By providing the weld surface with the combination of first and second surfaces, and third and fourth surfaces, the workpiece can be subjected to an LFW process and the resulting welded joint does not have trapped contaminants at a centre region of the joint, and also the welded joint does not suffer from deformation and detachment at the edges of the joint.

The double angled geometry of the weld stub prevents the generation of material deformation and detachment by providing additional lateral support to the edges of the weld interface. This additional support prevents the material ejected from the weld interface from deforming and detaching from the weld stub.

Optionally, the first angle is equal to the second angle.

Making the first angle equal to the second angle provides for a symmetrical sectional geometry for the portion of the workpiece that is closest to the contact zone. This ensures that weld material is ejected symmetrically from the contact zone during the weld process.

Optionally, the third angle is equal to the fourth angle.

Making the third angle equal to the fourth angle provides for a symmetrical sectional geometry for the portion of the workpiece that is furthest from the contact zone. This ensures that weld material is ejected symmetrically from the contact zone and the welded joint does not suffer from deformation and detachment at edges of the joint.

Optionally, the central ridge surface has a lateral width of between approximately 1mm and 5mm.

Keeping the lateral width of the central ridge less than 5mm more effectively provides for the ejection of surface contaminants from the weld zone. However, in alternative arrangements of the disclosure the central ridge surface may have a lateral width of up to approximately 9mm.

Optionally, each of the first angle and the second angle is between approximately 6° and 12°.

Keeping the first angle and the second angle within the range of approximately 6° and 12° provides a balance between ensuring the elimination of surface contaminants from the weld zone, and minimising the volume of material that must be ejected from the joint as flash during the weld process.

Optionally, each of the first angle and the second angle is between approximately 6° and 30°.

Keeping the first angle and the second angle within the range of approximately 6° and 30° provides a balance between ensuring the elimination of surface contaminants from the weld zone, and minimising the volume of material that must be ejected from the joint as flash during the weld process.

Optionally, each of the third angle and the fourth angle is between approximately 30° and 65°.

The selection of the third angle and the fourth angle as being between approximately 30° and 65° ensures that there is sufficient mechanical support at the stub corners to avoid deformation and detachment conditions from developing

Optionally, each of the third angle and the fourth angle is between approximately 30° and 90°.

The selection of the third angle and the fourth angle as being greater than 65° and less than approximately 90° provides a balance between additional mechanical support at the stub corners to minimise deformation and detachment conditions from developing, and minimising the addition of material to the workpiece, which subsequently may have to be machined away after the friction welding process.

Optionally, the weld surface is curvilinear.

When using the LFW process to join blades to a disc, for example to form a bladed disk, the weld surface is curvilinear.

Optionally, the workpiece is formed from titanium or nickel alloys.

The process of deformation and detachment can expose the weld joint to atmospheric contamination formed at the weld interface during heating and compromise optimum conditions for the extrusion and ejection of contamination from the weld joint. A particular example of this being the formation of hard alpha particles in titanium alloys.

According to the present invention there is provided a method of linear friction welding as defined in Claim 1, the method comprising the steps of:
providing a first workpiece and a second workpiece, the first workpiece comprising a first weld surface, and the second workpiece comprising a second weld surface, and at least one of the first weld surface and the second weld surface comprises a central ridge surface extending along the weld surface, the central ridge surface being flanked on either side respectively by a first surface and a second surface, the first surface subtending a first angle with the central ridge surface, and the second surface subtending a second angle with the central ridge surface, the first surface being further flanked by a third surface, and the second surface 20 being further flanked by a fourth surface, the third surface subtending a third angle with the central ridge surface, the fourth surface subtending a fourth angle with the central ridge surface, and each of the third angle and the fourth angle being less than 90°; and
positioning the first workpiece adjacent to the second workpiece, with the first weld surface being in engagement with the second weld surface;
characterised in that the method comprises the additional steps of:
reciprocating the first workpiece and the second workpiece against one another such that at least one of the first weld surface and the second weld surface moves relative to the other of the first weld surface and the second weld surface, such that a temperature at the first and second weld surfaces increases to create a weld interface; and
stopping the reciprocating and allowing the first workpiece and the second workpiece to cool to weld the first workpiece and the second workpiece together.

However, when an angled geometry is used for one of the weld stubs then the problem of deformation and detachment has been shown to occur.

By providing the weld surface with the combination of first and second surfaces, and third and fourth surfaces, the workpiece can be subjected to an LFW process and the resulting welded joint does not have trapped contaminants at a centre region of the joint, and also the welded joint does not suffer from deformation and detachment at edges of the joint.

Further embodiments of the present invention are defined in Claims 2 - 5.As described above, the selection of the first and second angles assists in the ejection of surface contaminants from the weld zone in the flash. However, when the first workpiece and the second workpiece are formed from different materials it may be necessary to provide the first workpiece with different first and second angles to those on the second workpiece in order to ensure that the resulting friction weld is fully formed across the weld zone.

Consequently, it may be necessary to adjust the first and second workpiece geometry such that a ratio between the first and second angles on the first workpiece, and the corresponding first and second angles on the second workpiece, corresponds to a ratio between a strength parameter of the first and second workpiece materials.

As outlined above, the third angle and the fourth angle provide the outer edge regions of the workpiece with increased mechanical support and thus reduces the possibility of deformation or detachment of the workpiece corners.

In a situation where the first workpiece and the second workpiece are formed from dissimilar materials, the material characteristics for the first workpiece will differ from the material characteristics for the second workpiece. This difference in material characteristics between the first workpiece and the second workpiece will result in an asymmetric upsetting behaviour during the friction welding process between the first workpiece and the second workpiece. If both the first workpiece and the second workpiece have the same geometry then the resulting friction weld will be asymmetric across the weld interface, for example with a harder workpiece 'burrowing' into a softer workpiece and so producing a poor quality welded joint.

It is therefore necessary to adjust the first and second workpiece geometry such that a ratio between the third and fourth angles on the first workpiece, and the corresponding third and fourth angles on the second workpiece, corresponds to a ratio between a strength parameter of the first and second workpiece materials.

In one arrangement, the ratio between the third and fourth angles on the first workpiece, and the respective third and fourth angles on the second workpiece may be determined on the basis of the relative upset of each of the first and second workpieces when the first workpiece and the second workpiece have the same geometry.

As outlined above, empirical relative upset data may be used to determine the ratio between the third and fourth angles on the first workpiece, and the respective third and fourth angles on the second workpiece. Alternatively, this ratio may be determined using an analytical modelling technique. Such techniques use the material parameters such as flow stress, yield stress or ultimate tensile stress to model the flow behaviour of the material during the friction welding process.

In the same way as outlined above for the double angled geometry, the first and second flank surfaces provide the outer edge regions of the second workpiece with increased mechanical support and thus reduces the possibility of deformation or detachment of the second workpiece corners.

According to a third aspect of the present disclosure, not forming part of the present invention, there is provided a pair of friction welding workpieces for use with a friction welding process, comprising a first workpiece and a second workpiece, wherein the first workpiece comprises a first weld surface and the second workpiece comprises a second weld surface, the first weld surface comprising a central ridge surface extending along the weld surface, the central ridge surface being flanked on either side respectively by a first surface and a second surface, the first surface subtending a first angle with the central ridge surface, and the second surface subtending a second angle with the central ridge surface, the first surface being further flanked by a first side surface, and the second surface being further flanked by a second side surface, each of the first and second side surfaces being normal to the central ridge surface, the second weld surface comprising a central surface being flanked on either side respectively by a first flank surface and a second flank surface, the first flank surface subtending a first flank angle with the central surface, the second flank surface subtending a second flank angle with the central surface, and each of the first flank angle and the second flank angle being less than 90°, and the first weld surface is positioned in conformal engagement with the second weld surface.

In this arrangement, the first workpiece and the second workpiece may each be formed from the same material. There may be design limitations on a lateral width of the first workpiece that prevents the geometry of the first workpiece from including third and fourth surfaces. In other words, the first workpiece is provided with first and second side surfaces that are normal to the central ridge surface. In this arrangement, the second workpiece may be provided with angled first and second flank surfaces. These first and second flank surfaces act to provide additional lateral support to the edges of the weld interface. In this way, the first and second flank surfaces act to prevent deformation and detachment at the edges of the weld interface.

Optionally, the central ridge surface has a lateral width of between approximately 1mm and 5mm.

Keeping the lateral width of the central ridge less than 5mm more effectively provides for the ejection of surface contaminants from the weld zone.

Optionally, each of the first angle and the second angle is between approximately 6° and 30°.

Keeping the first angle and the second angle within the range of approximately 6° and 30° provides a balance between ensuring the elimination of surface contaminants from the weld zone, and minimising the volume of material that must be ejected from the joint as flash during the weld process.

Optionally, the reciprocating motion is a linear reciprocating motion.

In one arrangement the relative motion between the first workpiece and the second workpiece is a linear reciprocating motion.

In other arrangements, the relative motion between the first workpiece and the second workpiece is nonlinear, such as a sinusoidal reciprocating motion or an elliptical reciprocating motion.

Optionally, the weld surface is curvilinear.

Optionally, each of the first workpiece and the second workpiece is formed from a titanium alloy.

Optionally, the first workpiece is a rotor, and the second workpiece is a rotor blade.

Optionally, the rotor is a fan disc, and the blade is a fan blade.

Optionally, the rotor is a compressor disc or a compressor drum, and the blade is a compressor blade.

### Brief Description of the Drawings

There now follows a description of an embodiment of the disclosure, by way of nonlimiting example, with reference being made to the accompanying drawings in which:
Figure 1 shows a schematic sectional view of a linear friction welded joint according to the prior art;
Figures 2A, 2B and 2C shows schematic views of a linear friction welded joint, according to the prior art, in which one stub portion has a single angled geometry, and illustrating the problem of deformation and detachment of the joint corners;
Figure 3 shows a schematic perspective view of a weld stub;
Figure 4 shows a sectional view on the weld stub of Figure 3;
Figure 5 shows a schematic perspective view of two opposing weld stubs and illustrating the orientation of axial and lateral motion;
Figure 6 shows the two opposing weld stubs of Figure 5 in contact with one another;
Figure 7 shows a schematic perspective view of a rotor and a rotor blade showing a weld stub according to the disclosure of Figures 3 to 6;
Figure 8 shows a schematic sectional view of two opposing weld stubs;
Figure 9 shows a schematic sectional view of two opposing weld stubs;
Figure 10 shows a schematic sectional view of two opposing weld stubs; and
Figure 11 shows a schematic sectional view of two opposing weld stubs.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

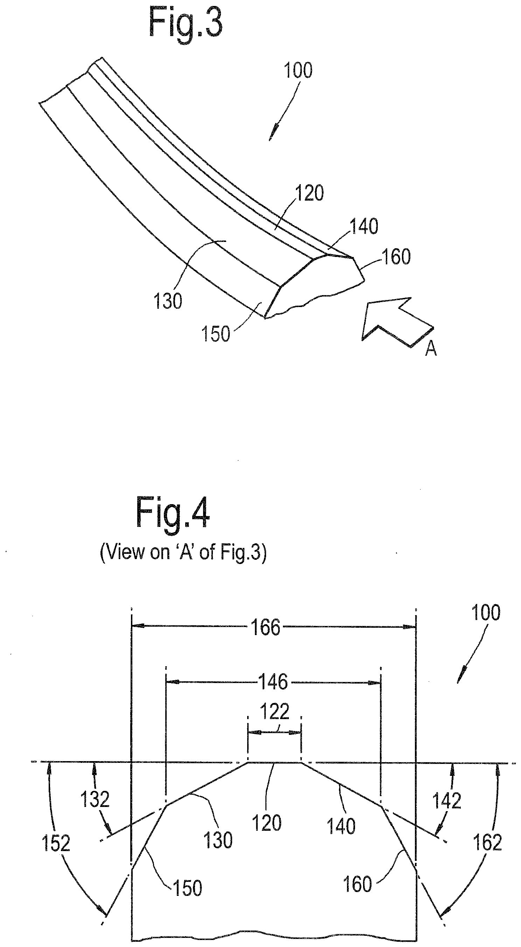

Referring to Figures 3 to 5, a workpiece used in the friction welding method according to the present invention is designated generally by the reference numeral 100.

The workpiece 100 takes the form of a weld stub 100 and comprises a weld surface 110. The weld surface 110 comprises a central ridge surface 120 extending along the weld surface 110. The central ridge surface 120 extends linearly across a lateral width 122 of the weld surface 110. The central ridge surface 120 has a lateral width 122 of 4mm. The central ridge surface 120 is flanked on either side respectively by a first surface 130 and a second surface 140.

The first surface 130 subtends a first angle 132 with the central ridge surface 120. The second surface 140 subtends a second angle 142 with the central ridge surface 120. The first and second surfaces 130,140 together with the central ridge surface 120 together define an upper width 146, which has a value of 8mm.

The first surface 130 is further flanked by a third surface 150 on a distal side of the first surface 130 from the central ridge surface 120. The second surface 140 is further flanked by a fourth surface 160 on a distal side of the second surface 140 from the central ridge surface 120. The third and fourth surfaces 150,160 together with the central ridge surface 120 together define a lower width 166, which has a value of 14mm.

The third surface 150 subtends a third angle 152 with the central ridge surface 120. The fourth surface 160 subtends a fourth angle 162 with the central ridge surface 120.

This arrangement of a central ridge surface 120 flanked on opposing sides by first and second surfaces 130,140 that are in turn flanked on opposing sides by third and fourth surfaces 150,160 provides a double angled sectional geometry to the workpiece 100.

In the arrangement shown in Figures 3 to 5, the first angle 132 is equal to the second angle 142. In this arrangement, the first and second angles 132,142 are each acute angles and have a value of between 8° and 12° relative to the central ridge surface 120.

In the arrangement shown in Figures 3 to 5, the third angle 152 is equal to the fourth angle 142. In this arrangement, the third and fourth angles 142,152 are each acute angles and have a value of between 30° and 65° relative to the central ridge surface 120.

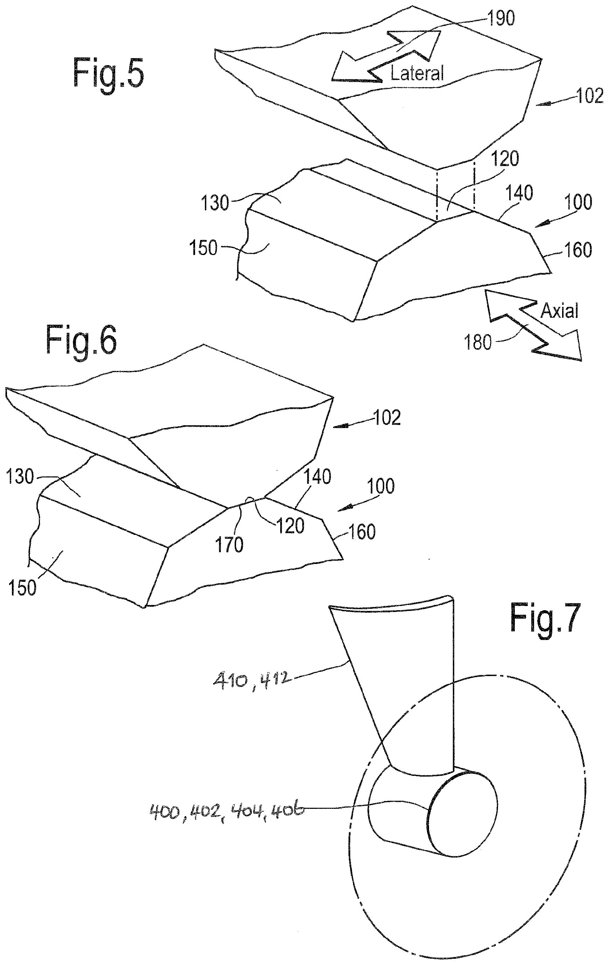

Figure 5 shows a schematic perspective view of a weld joint comprising a first workpiece 100 and a second workpiece 102. In this arrangement, each of the first workpiece 100 and the second workpiece 102 comprises the features described above in relation to the workpiece 100 shown in Figures 3 and 4.

The first workpiece 100 and the second workpiece 102 are brought together such that the central ridge surface 120 of each workpiece 100,102 are aligned and in contact with one another, defining a weld interface 170.

A linear friction welding process is then initiated by applying a compressive force normally across the contact between the central ridge surfaces 120 of each of the first and second workpieces 100,102, whilst also providing relative reciprocating motion between the first and second workpieces 100,102. This follows conventional linear friction welding process operation and the details of this operation will not be discussed further here, being well known to a skilled person.

In the arrangement illustrated in the figures, the reciprocating motion is in the lateral direction as indicated by feature 190 in Figure 5.

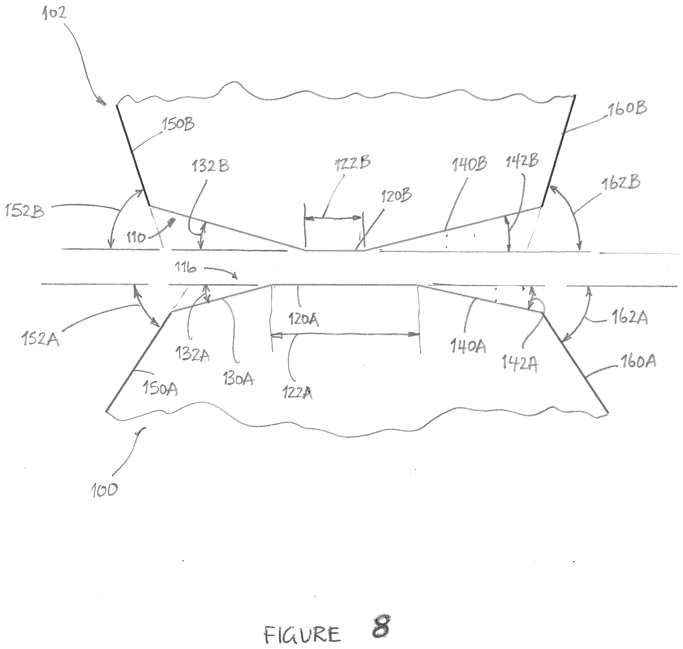

A workpiece is illustrated in Figure 8. In this arrangement, the first workpiece 100 is formed from a first material having a first hardness value, and the second workpiece 102 is formed from a second material having a second hardness value, where the first hardness is less than the second hardness. For example, the first workpiece 100 may be formed from a first titanium alloy and the second workpiece 102 may be formed from a second titanium alloy, where the first titanium alloy has a higher hardness than the second titanium alloy.

Both the first workpiece 100 and the second workpiece 102 have a double angled sectional geometry as outlined above.

Each of the first workpiece 100 and the second workpiece 102 comprises a central ridge surface 120A,120B having a lateral width 122A,122B that is flanked on either side respectively by a first surface 130A,130B and a second surface 140A,140B. The central ridge surface 120A has a lateral width 122A of 4mm, and the central ridge surface 120B has a lateral width 122B of 2mm.

The first surface 130A,130B subtends a first angle 132A,132B with the central ridge surface 120A,120B. The second surface 140A,140B subtends a second angle 142A,142B with the central ridge surface 120A,120B. The first angle 132A is equal to the first angle 132B and, in turn, is equal to each of the second angles 142A,142B. In this embodiment, the first and second angles 132A,132B;142A,142B subtend an angle of 14° relative to the respective central ridge surface 120A,120B.

Each first surface 130A,130B is further flanked by a third surface 150A,150B on a distal side of the first surface 130A,130B from the central ridge surface 120A,120B. Each second surface 140A,140B is further flanked by a fourth surface 160A,160B on a distal side of the second surface 140A,140B from the central ridge surface 120A,120B.

The third surface 150A,150B subtends a third angle 152A,152B with the central ridge surface 120A,120B. The fourth surface 160A,160B subtends a fourth angle 162A,162B with the central ridge surface 120A,120B.

The third angle 152A is equal to the fourth angle 162A, and each subtends an angle of 40° relative to the central ridge surface 120A. Additionally, the third angle 152B is equal to the fourth angle 162B, and each subtends an angle of 70° relative to the central ridge surface 120B.

The higher hardness of the second workpiece 102 relative to that of the first workpiece 100 means that the third and fourth angles 152B,162B of the second workpiece 102 can be greater than the corresponding third and fourth angles 152A,162A of the first workpiece 100. This is because the higher hardness of the second workpiece 102 requires less mechanical support to prevent deformation or detachment of the sub corners.

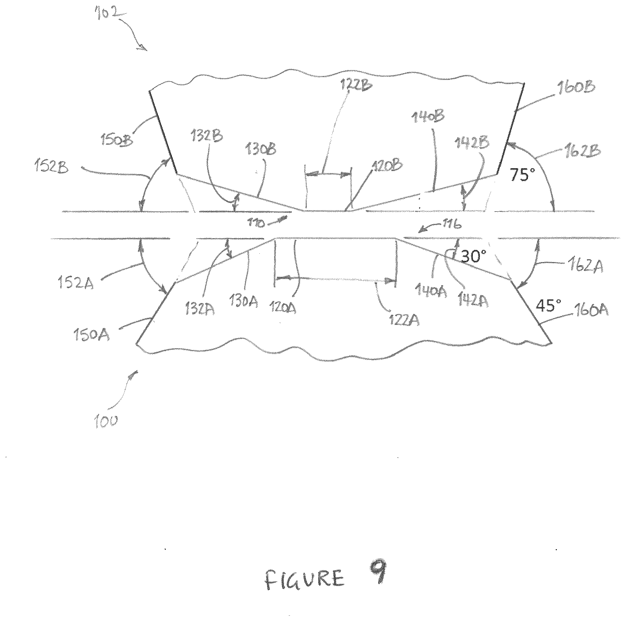

Figure 9 illustrates another workpiece. The workpiece of Figure 9 has the same double angled cross-sectional geometry as has been described above for Figure 8.

Figure 9 differs from Figure 8 only in respect of the first and second angles 132A,142A. In Figure 9, the first angle 132A is equal to the second angle 142A, and each subtends an angle of 25° relative to the central ridge surface 120A.

As explained previously, the third and fourth surfaces (150A,150B;160A,160B) prevent the generation of material deformation and detachment at the weld interface by providing additional lateral support to the edges of the weld interface. This additional mechanical support prevents the material ejected from the weld interface from deforming and detaching from the weld stub.

Since the first and second materials have different hardness values to one another it is necessary to provide the first workpiece 100 with a different value for the third and fourth angle to that of the second workpiece 102.

The determination of the third and fourth angles 152A,152B;162A,162B for each of the first and second workpieces 100,102 can be determined from the relative upset between the first and second workpieces 100,102. In other words, by knowing the upset behaviour of each of the first and second materials, for example for a standard geometry it is possible to determine the magnitudes the third and fourth angles 152A,152B;162A,162B for each of the first and second workpieces 100,102.

As an example, if the first workpiece 100 is formed from a harder material than the second workpiece 102, then the third and fourth angles 152A;162A for the first workpiece 100 will be greater (i.e. closer to 90°) than the corresponding third and fourth angles 152B; 162B for the second workpiece 102.

While Figures 8 and 9 relate to situations in which the first and second workpiece 100,102 are formed from materials having different hardness, the workpiece geometry may equally be applied to situations in which the first workpiece 100 and the second workpiece 102 are formed from materials having the same hardness. For example, the first workpiece and the second workpiece may each be formed from a titanium alloy.

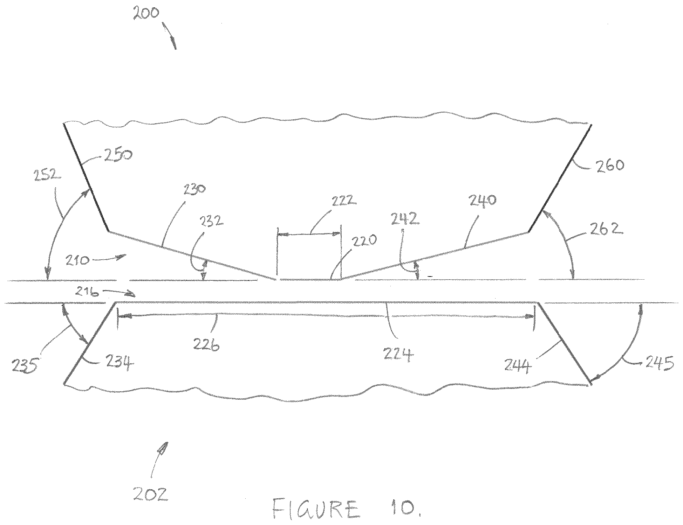

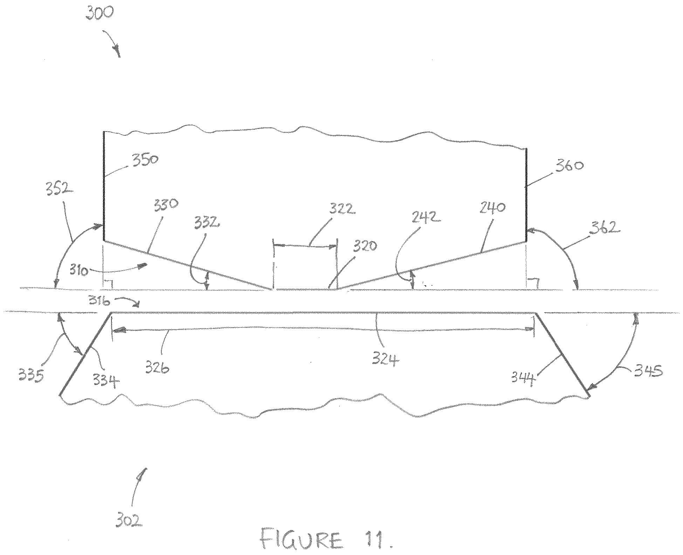

Figures 10 and 11 respectively show that the first workpiece 200,300 and the second workpiece 202,302 are formed from materials having the same hardness.

Figure 10 illustrates that a first workpiece 200 is formed from a first material, and a second workpiece 201 is formed from a second material, with the first and second materials having the same hardness.

The first workpiece 200 comprises a central ridge surface 220 having a lateral width 222 that is flanked on either side by a first surface 230 and a second surface 240. The first surface 230 subtends a first angle 232 with the central ridge surface 220, and the second surface 240 subtends a second angle 242 with the central ridge surface 220. Each of the first angle 232 and the second angle 242 is 10°.

The first surface 230 is further flanked by a third surface 250 on a distal side of the first surface 230 from the central ridge surface 220. The second surface 240 is further flanked by a fourth surface 260 on a distal side of the second surface 240 from the central ridge surface 220.

The third surface 250 subtends a third angle 252 with the central ridge surface 220. The fourth surface 260 subtends a fourth angle 262 with the central ridge surface 220. In this embodiment, the third angle 252 is equal to the fourth angle 262, and each subtends an angle of 40° relative to the central ridge surface 220.

The second workpiece 202 comprises a central surface 224 having a lateral width 226 of approximately 24 mm, flanked on either side respectively by a first flank surface 234 and a second flank surface 236. Each of the first flank surface 234 and the second flank surface 244 subtends a corresponding first flank angle 235 and second flank angle 245 relative to the central surface 224. In this arrangement, the first flank angle 234 is equal to the second flank angle 245 and has a value of 40°.

Figure 11 illustrates that a first workpiece 300 is formed from a first material, and a second workpiece 301 is formed from a second material, with the first and second materials having the same hardness.

The first workpiece 300 comprises a central ridge surface 320 having a lateral width 322 that is flanked on either side by a first surface 330 and a second surface 340. The first surface 330 subtends a first angle 332 with the central ridge surface 320, and the second surface 340 subtends a second angle 342 with the central ridge surface 320. Each of the first angle 332 and the second angle 342 is 10°.

The first surface 330 is further flanked by a first side surface 350 on a distal side of the first surface 330 from the central ridge surface 320. The second surface 340 is further flanked by a second surface 360 on a distal side of the second surface 340 from the central ridge surface 320.

Each of the first side surface 350 and the second side surface 360 is oriented at 90° to (i.e. normal to) the central ridge surface 320.

The second workpiece 302 comprises a central surface 324 having a lateral width 326 of approximately 24 mm, flanked on either side respectively by a first flank surface 334 and a second flank surface 336. Each of the first flank surface 334 and the second flank surface 344 subtends a corresponding first flank angle 335 and second flank angle 345 relative to the central surface 324. In this arrangement, the first flank angle 334 is equal to the second flank angle 345 and has a value of 40°.

The method according to the present invention may be applied to a variety of linear friction welding scenarios. Figure 7 illustrates an example of such an application in which a rotor 400 is joined with a rotor blade 410. A plurality of fan rotor blades 410 may then be joined to the rotor 400 to thereby form a bladed fan disk 402. In the alternative, a plurality of compressor blades 412 may be joined to a compressor drum 406 to form a compressor disk 404.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the present invention as defined by the appended claims.

## Claims

1. A method of linear friction welding, the method being **characterised by** the steps of:
providing a first workpiece (100) and a second workpiece (102), the first workpiece (100) comprising a first weld surface (110), and the second workpiece (102) comprising a second weld surface (116), and at least one of the first weld surface (110) and the second weld surface (116) comprises a central ridge surface (120) extending along the weld surface (110), the central ridge surface (120) being flanked on either side respectively by a first surface (130) and a second surface (140), the first surface (130) subtending a first angle (132) with the central ridge surface (120), and the second surface (140) subtending a second angle (142) with the central ridge surface (120), the first surface (130) being further flanked by a third surface (150), and the second surface (140) being further flanked by a fourth surface (160), the third surface (150) subtending a third angle (152) with the central ridge surface (120), the fourth surface (160) subtending a fourth angle (162) with the central ridge surface (120), and each of the third angle (150) and the fourth angle (160) being less than 90°; and
positioning the first workpiece (100) adjacent to the second workpiece (102), with the first weld surface (110) being in engagement with the second weld surface (116);
wherein the method comprises the additional steps of:
reciprocating the first workpiece (100) and the second workpiece (102) against one another such that at least one of the first weld surface (110) and the second weld surface (116) moves relative to the other of the first weld surface (110) and the second weld surface (116), such that a temperature at the first and second weld surfaces (110:116) increases to create a weld interface (170); and
stopping the reciprocating and allowing the first workpiece (100) and the second workpiece (102) to cool to weld the first workpiece (100) and the second workpiece (102) together.

2. The method as claimed in Claim 1, wherein in the step of providing a first workpiece (100) and a second workpiece (102), the second workpiece (102) comprises a second weld surface (116), and at least one of the first weld surface (110) and the second weld surface (116) comprises a central ridge surface (120) extending along the weld surface (110), the central ridge surface (120) being flanked on either side respectively by a first surface (130) and a second surface (140), the first surface (130) subtending a first angle (132) with the central ridge surface (120), and the second surface (140) subtending a second angle (142) with the central ridge surface (120), the first surface (130) being further flanked by a third surface (150), and the second surface (140) being further flanked by a fourth surface (160), the third surface (150) subtending a third angle (152) with the central ridge surface (120), the fourth surface (160) subtending a fourth angle (162) with the central ridge surface (120), and each of the third angle (150) and the fourth angle (160) being less than 90°.

3. The method as claimed in Claim 1 or Claim 2, wherein the first workpiece (100) is formed from a first material having a first flow stress, a first yield stress and a first ultimate tensile stress, and the second workpiece (102) is formed from a material having a second flow stress, a second yield stress and a second ultimate tensile stress, and a first ratio is defined between the first angle (132) of the first workpiece (100) and a corresponding one of the first angle (132) and second angle (142) of the second workpiece (102), and a second ratio is defined between the second angle (142) of the first workpiece (100) and the other of the first angle (132) and second angle (142) of the second workpiece (102), and each of the first ratio and the second ratio is a function of a third ratio between one of the first flow stress, first yield stress and first ultimate tensile stress, and a corresponding one of the second flow stress, second yield stress and second ultimate tensile stress.

4. The method as claimed in Claim 1 or Claim 2, wherein the first workpiece (100) is formed from a first material having a first flow stress, a first yield stress and a first ultimate tensile stress, and the second workpiece (102) is formed from a material having a second flow stress, a second yield stress and a second ultimate tensile stress, and a first ratio is defined between the third angle (152) of the first workpiece (100) and a corresponding one of the third angle (152) and fourth angle (162) of the second workpiece (102), and a second ratio is defined between the fourth angle (152) of the first workpiece (100) and the other of the third angle (152) and fourth angle (162) of the second workpiece (102), and each of the first ratio and the second ratio is a function of a third ratio between one of the first flow stress, first yield stress and first ultimate tensile stress, and a corresponding one of the second flow stress, second yield stress and second ultimate tensile stress.

5. The method as claimed in Claim 1, wherein in the step of providing a first workpiece (100) and a second workpiece (102),the second workpiece (102) comprises a second weld surface (116), the second weld surface (116) comprises a central surface (120) being flanked on either side respectively by a first flank surface (134) and a second flank surface (144), the first flank surface (134) subtending a first flank angle (135) with the central surface (120), the second flank surface (144) subtending a second flank angle (145) with the central surface (120), and each of the first flank angle (135) and the second flank angle (145) being less than 90°.

## Patentansprüche

1. Verfahren für lineares Reibschweißen, wobei das Verfahren durch die Schritte gekennzeichnet ist:
ein Bereitstellen eines ersten Werkstücks (100) und eines zweiten Werkstücks (102), wobei das erste Werkstück (100) eine erste Schweißfläche (110) und das zweite Werkstück (102) eine zweite Schweißfläche (116) umfasst, und mindestens eine aus der ersten Schweißfläche (110) und der zweiten Schweißfläche (116) eine zentrale Stegfläche (120) umfasst, die sich entlang der Schweißfläche (110) erstreckt, wobei die zentrale Stegfläche (120) auf beiden Seiten jeweils von einer ersten Fläche (130) und einer zweiten Fläche (140) flankiert ist, wobei sich die erste Fläche (130) mit der zentralen Stegfläche (120) in einem ersten Winkel (132) schneidet, und sich die zweite Fläche (140) in einem zweiten Winkel (142) mit der zentralen Stegfläche (120) schneidet, wobei die erste Fläche (130) des Weiteren von einer dritten Fläche (150) und die zweite Fläche (140) des Weiteren von einer vierten Fläche (160) flankiert wird, wobei die dritte Fläche (150) sich in einem dritten Winkel (152) mit der zentralen Stegfläche (120) schneidet, die vierte Fläche (160) sich in einem vierten Winkel (162) mit der zentralen Stegfläche (120) schneidet und der dritte Winkel (150) und der vierte Winkel (160) jeweils weniger als 90° betragen;und
ein Positionieren des ersten Werkstücks (100) neben dem zweiten Werkstück (102), wobei die erste Schweißfläche (110) mit der zweiten Schweißfläche (116) in Eingriff ist;
wobei das Verfahren die zusätzlichen Schritte umfasst:
ein Hin- und Herbewegen des ersten Werkstücks (100) und des zweiten Werkstücks (102) gegeneinander, sodass sich mindestens eine der ersten Schweißfläche (110) und der zweiten Schweißfläche (116) relativ zu der anderen der ersten Schweißfläche (110) und der zweiten Schweißfläche (116) bewegt, sodass eine Temperatur an der ersten und der zweiten Schweißfläche (110; 116) ansteigt, um eine Schweißgrenzfläche (170) zu erzeugen; und
ein Anhalten der Hin- und Herbewegung und ein Abkühlenlassen des ersten Werkstücks (100) und des zweiten Werkstücks (102), um das erste Werkstück (100) und das zweite Werkstück (102) zusammenzuschweißen.

2. Verfahren nach Anspruch 1, wobei in dem Schritt des Bereitstellens eines ersten Werkstücks (100) und eines zweiten Werkstücks (102) das zweite Werkstück (102) eine zweite Schweißfläche (116) umfasst, und mindestens eine aus der ersten Schweißfläche (110) und der zweiten Schweißfläche (116) eine zentrale Stegfläche (120) umfasst, die sich entlang der Schweißfläche (110) erstreckt, wobei die zentrale Stegfläche (120) auf beiden Seiten jeweils von einer ersten Fläche (130) und einer zweiten Fläche (140) flankiert ist, wobei sich die erste Fläche (130) mit der zentralen Stegfläche (120) in einem ersten Winkel (132) schneidet, und die zweite Fläche (140) sich in einem zweiten Winkel (142) mit der zentralen Stegfläche (120) schneidet, wobei die erste Fläche (130) des Weiteren von einer dritten Fläche (150) und die zweite Fläche (140) des Weiteren von einer vierten Fläche (160) flankiert wird, wobei sich die dritte Fläche (150) in einem dritten Winkel (152) mit der zentralen Stegfläche (120) schneidet, die vierte Fläche (160) sich in einem vierten Winkel (162) mit der zentralen Stegfläche (120) schneidet und der dritte Winkel (150) und der vierte Winkel (160) jeweils weniger als 90° betragen.

3. Verfahren nach Anspruch 1 oder Anspruch 2, wobei das erste Werkstück (100) aus einem ersten Werkstoff mit einer ersten Fließspannung, einer ersten Streckspannung und einer ersten Höchstzugkraft gebildet wird und das zweite Werkstück (102) aus einem Werkstoff mit einer zweiten Fließspannung, einer zweiten Streckspannung und einer zweiten Höchstzugkraft gebildet wird und ein erstes Verhältnis zwischen dem ersten Winkel (132) des ersten Werkstücks (100) und einem entsprechenden Winkel aus dem ersten Winkel (132) und dem zweiten Winkel (142) des zweiten Werkstücks (102) definiert wird, und ein zweites Verhältnis zwischen dem zweiten Winkel (142) des ersten Werkstücks (100) und dem anderen des ersten Winkels (132) und des zweiten Winkels (142) des zweiten Werkstücks (102) definiert ist, und jedes des ersten Verhältnisses und des zweiten Verhältnisses eine Funktion eines dritten Verhältnisses zwischen einem aus der ersten Fließspannung, der ersten Streckspannung und der ersten Höchstzugkraft und einem entsprechenden aus der zweiten Fließspannung, der zweiten Streckspannung und der zweiten Höchstzugkraft ist.

4. Verfahren nach Anspruch 1 oder Anspruch 2, wobei das erste Werkstück (100) aus einem ersten Werkstoff mit einer ersten Fließspannung, einer ersten Streckspannung und einer ersten Höchstzugkraft gebildet wird und das zweite Werkstück (102) aus einem Werkstoff mit einer zweiten Fließspannung, einer zweiten Streckspannung und einer zweiten Höchstzugkraft gebildet wird, und ein erstes Verhältnis zwischen dem dritten Winkel (152) des ersten Werkstücks (100) und einem entsprechenden des dritten Winkels (152) und des vierten Winkel (162) des zweiten Werkstücks (102) definiert wird, und ein zweites Verhältnis zwischen dem vierten Winkel (152) des ersten Werkstücks (100) und dem anderen des dritten Winkels (152) und des vierten Winkels (162) des zweiten Werkstücks (102) definiert ist, und jedes des ersten und zweiten Verhältnisses eine Funktion eines dritten Verhältnisses zwischen einem aus der ersten Fließspannung, der ersten Streckspannung und der ersten Höchstzugkraft und einem entsprechenden aus der zweiten Fließspannung, der zweiten Streckspannung und der zweiten Höchstzugkraft ist.

5. Verfahren nach Anspruch 1, wobei in dem Schritt des Bereitstellens eines ersten Werkstücks (100) und eines zweiten Werkstücks (102) das zweite Werkstück (102) eine zweite Schweißfläche (116) umfasst, die zweite Schweißfläche (116) eine zentralen Fläche (120) umfasst, die auf jeder Seite jeweils von einer ersten Flankenfläche (134) und einer zweiten Flankenfläche (144) flankiert ist, wobei sich die erste Flankenfläche (134) in einem ersten Flankenwinkel (135) mit der zentralen Fläche (120) schneidet, die zweite Flankenfläche (144) sich in einem zweiten Flankenwinkel (145) mit der zentralen Fläche (120) schneidet und sowohl der erste Flankenwinkel (135) als auch der zweite Flankenwinkel (145) kleiner als 90° sind.

## Revendications

1. Procédé de soudage par friction linéaire, le procédé étant **caractérisé par** les étapes de :
fourniture d'une première pièce (100) et d'une seconde pièce (102), la première pièce (100) comprenant une première surface de soudure (110) et la seconde pièce (102) comprenant une seconde surface de soudure (116) et au moins l'une de la première surface de soudure (110) et de la seconde surface de soudure (116) comprend une surface de crête centrale (120) s'étendant le long de la surface de soudure (110), la surface de crête centrale (120) étant flanquée de chaque côté respectivement d'une première surface (130) et une deuxième surface (140), la première surface (130) sous-tendant un premier angle (132) avec la surface de crête centrale (120), et la deuxième surface (140) sous-tendant un deuxième angle (142) avec la surface de crête centrale (120), la première surface (130) étant en outre flanquée d'une troisième surface (150), et la deuxième surface (140) étant en outre flanquée d'une quatrième surface (160), la troisième surface (150) sous-tendant une troisième angle (152) avec la surface de crête centrale (120), la quatrième surface (160) sous-tendant un quatrième angle (162) avec la surface de crête centrale (120), et chacun du troisième angle (150) et du quatrième angle (160) étant inférieur à 90° ; et
positionnement de la première pièce (100) adjacente à la seconde pièce (102), la première surface de soudure (110) étant en prise avec la seconde surface de soudure (116) ;
ledit procédé comprenant les étapes supplémentaires de :
déplacement selon un mouvement alternatif de la première pièce (100) et de la seconde pièce (102) l'une contre l'autre de sorte qu'au moins l'une de la première surface de soudure (110) et de la seconde surface de soudure (116) se déplace par rapport à l'autre de la première surface de soudure (110) et de la seconde surface de soudure (116), de sorte qu'une température au niveau des première et seconde surfaces de soudure (110 : 116) augmente pour créer une interface de soudure (170) ; et
arrêt du mouvement alternatif et refroidissement libre de la première pièce (100) et de la seconde pièce (102) pour souder ensemble la première pièce (100) et la seconde pièce (102).

2. Procédé selon la revendication 1, dans l'étape de fourniture d'une première pièce (100) et d'une seconde pièce (102), ladite seconde pièce (102) comprenant une seconde surface de soudure (116) et au moins l'une de la première surface de soudure (110) et de la seconde surface de soudure (116) comprenant une surface de crête centrale (120) s'étendant le long de la surface de soudure (110), la surface de crête centrale (120) étant flanquée de chaque côté respectivement d'une première surface (130) et d'une deuxième surface (140), la première surface (130) sous-tendant un premier angle (132) avec la surface de crête centrale (120), et la deuxième surface (140) sous-tendant un deuxième angle (142) avec la surface de crête centrale (120), la première surface (130) étant en outre flanquée d'une troisième surface (150), et la deuxième surface (140) étant en outre flanquée d'une quatrième surface (160), la troisième surface (150) sous-tendant un troisième angle (152) avec la surface de crête centrale (120), la quatrième surface (160) sous-tendant un quatrième angle (162) avec la surface de crête centrale (120), et chacun du troisième angle (150) et du quatrième angle (160) étant inférieur à 90°.

3. Procédé selon la revendication 1 ou 2, ladite première pièce (100) étant formée d'un premier matériau possédant une première contrainte d'écoulement, une première contrainte d'élasticité et une première contrainte de traction ultime, et ladite seconde pièce (102) étant formée à partir d'un matériau possédant une seconde contrainte d'écoulement, une seconde contrainte d'élasticité et une seconde contrainte de traction ultime, et un premier rapport étant défini entre le premier angle (132) de la première pièce (100) et l'un correspondant du premier angle (132) et du deuxième angle (142) de la seconde pièce (102), et un deuxième rapport étant défini entre le deuxième angle (142) de la première pièce (100) et l'autre du premier angle (132) et du deuxième angle (142) de la seconde pièce (102), et chacun du premier rapport et du deuxième rapport étant une fonction d'un troisième rapport entre l'une de la première contrainte d'écoulement, de la première contrainte d'élasticité et de la première contrainte de traction ultime, et l'une correspondante de la seconde contrainte d'écoulement, de la seconde contrainte d'élasticité et de la seconde contrainte de traction ultime.

4. Procédé selon la revendication 1 ou 2, ladite première pièce (100) étant formée d'un premier matériau possédant une première contrainte d'écoulement, une première contrainte d'élasticité et une première contrainte de traction ultime, et ladite seconde pièce (102) étant formée à partir d'un matériau possédant une seconde contrainte d'écoulement, une seconde contrainte d'élasticité et une seconde contrainte de traction ultime, et un premier rapport étant défini entre le troisième angle (152) de la première pièce (100) et l'un correspondant du troisième angle (152) et du quatrième angle (162) de la seconde pièce (102), et un deuxième rapport étant défini entre le quatrième angle (152) de la première pièce (100) et l'autre du troisième angle (152) et du quatrième angle (162) de la seconde pièce (102), et chacun du premier rapport et du deuxième rapport étant fonction d'un troisième rapport entre l'une de la première contrainte d'écoulement, la première contrainte d'élasticité et la première contrainte de traction ultime, et l'une correspondante de la seconde contrainte d'écoulement, de la seconde contrainte d'élasticité et de la seconde contrainte de traction ultime.

5. Procédé selon la revendication 1, dans ladite étape de fourniture d'une première pièce (100) et d'une seconde pièce (102), ladite seconde pièce (102) comprenant une seconde surface de soudure (116), ladite seconde surface de soudure (116) comprenant une surface centrale (120) flanquée de chaque côté respectivement d'une première surface de flanc (134) et d'une seconde surface de flanc (144), la première surface de flanc (134) sous-tendant un premier angle de flanc (135) avec la surface centrale (120), la seconde surface de flanc (144) sous-tendant un second angle de flanc (145) avec la surface centrale (120), et chacun du premier angle de flanc (135) et du second angle de flanc (145) étant inférieur à 90°.
